# EUROPEAN PATENT SPECIFICATION

(11) **EP 2 183 334 B1**
(45) Date of publication and mention of the grant of the patent: **09.12.2015**
(21) Application number: 08786877.4
(22) Date of filing: 05.08.2008
(51) Int. Cl.: C09K 5/10

(54) **HEAT TRANSFER FLUID**
WÄRMEÜBERTRAGUNGSLÜSSIGKEIT
FLUIDE DE TRANSFERT DE CHALEUR

(30) Priority: 06.08.2007 EP 07113884
(43) Date of publication of application: 12.05.2010
(73) Proprietor: Solvay Specialty Polymers Italy S.p.A., 20021 Bollate (MI) (IT)
(72) Inventor: SRINIVASAN, Padmanabhan, I-20135 Milano (IT); SPATARO, Gianfranco, I-20035 Lissone (IT); CARIGNANO, Gabriella, I-20020 Arese (MI) (IT); BASSI, Mattia, I-20146 Milano (IT); FARINA, Francesca, I-20030 Lentate Sul Seveso (MI) (IT)
(74) Representative: Benvenuti, Federica
(86) International application number: PCT/EP2008/060268
(87) International publication number: WO 2009/019267

(56) References cited:
- EP-A- 1 564 277
- US-A- 3 784 471
- US-A- 5 785 882
- US-A1- 2002 100 578
- US-A1- 2006 027 484
- US-A1- 2006 278 844
- US-A1- 2007 158 610
- US-B1- 6 432 320
- LEE ET AL: "Assessment of the effectiveness of nanofluids for single-phase and two-phase heat transfer in micro-channels" INTERNATIONAL JOURNAL OF HEAT AND MASS TRANSFER, PERGAMON PRESS, GB, vol. 50, no. 3-4, 13 December 2006 (2006-12-13), pages 452-463, XP005802786 ISSN: 0017-9310

## Description

### Technical Field

The present invention relates to dispersion compositions comprising fluorinated ether fluid, perfluoropolyether dispersant and fine particles. These dispersion compositions have improved thermal conductivity properties, which may translate to improved energy efficiency performance in a variety of heat transfer dependant applications. Such applications include vapor compression air conditioning and refrigeration systems of all types, secondary heat transfer fluids, and other heating or cooling fluid applications.

### Background Art

Heat transfer media have applications in both heating and cooling, including refrigeration, air conditioning, computer processors, thermal storage systems, heating pipes, fuel cells, and hot water and steam systems. Heat transfer media include a wide range of liquid or phase changing materials, including water, aqueous brines, alcohols, glycols, ammonia, hydrocarbons, ethers, and various halogen derivatives of these materials, such as chlorofluorocarbons (CFCs), hydrochlorofluorocarbons (HCFCs), (per)fluorinated polyethers (PFPE), and the like. These have been used alone or in combination with additives, such as refrigerant oil additives for lubrication and composites of fluids to affect boiling or freezing temperature. Such media are used to transfer heat from one body to another, typically from a heat source (e.g., an vehicle engine, boiler, computer chip, or refrigerator), to a heat sink, to effect cooling of the heat source, heating of the heat sink, or to remove unwanted heat generated by the heat source. The heat transfer medium provides a thermal path between the heat source and the heat sink, and may be circulated through a loop system or other flow system to improve heat flow.

Several criteria have been used for selecting heat transfer media for specific applications. Exemplary criteria include the influence of temperature on heat transfer capacity and viscosity, and the energy required to pump the medium through a heat transfer system. Specific parameters describing the comparative performance of a heat transfer medium are density, thermal conductivity, specific heat, and kinematic viscosity. The maximization of the heat transfer capability of any heat transfer system is important to the overall energy efficiency, material resource minimization, and system costs.

Completely or partially fluorinated fluids are widely used as heat transfer fluids in reliability testing of electronics, semiconductors manufacturing, vapour phase soldering and similar industries where their outstanding chemical inertness and dielectric properties are exploited. Thanks to their high chemical thermal and thermo-oxidative stability, non-toxicity and non-flammability, these fluids are used where safety concerns exist. In this view, heat transfer fluids based on perfluoropolyether structures have drawn increasing attention; their low ozone depletion potential is a peculiar feature of these fluorinated fluids that make them particularly attractive from an environmental point of view.

Environmental concerns regarding excessive energy consumption have prompted many industries to modify their commercial products and/or equipment designs to conserve energy. Consistent with the objective of energy conservation, improvements in performances of heat exchange fluids are constantly sought in the refrigeration and heat exchange fluids industries.

An approach that has been pursued in the art for maximizing thermal conductivity is to add to the heat transfer fluid suitable filler materials being thermally conductive to enhance the thermal conductivity of the heat transfer medium.

With this aim, nanoparticles have gained increased attention, as the high surface area of such materials maximizes their effect on heat exchange without negatively affecting liquid viscosity.

Thus, US 6432320 (BONSIGNORE ET AL.) 13.08.2002 discloses compositions comprising a heat transfer media (e.g. a fluorinated heat transfer medium) and a chemically stabilized nano-particle size powder. Suitable powders include those of copper, beryllium, titanium, nickel, iron, alloys or blends thereof, and carbon, modified by surface complexation or physical adsorption with a chemical agent, so as to form a colloidal dispersion which exhibits enhanced heat transfer capacity and thermal conductivity.

Also, US 2006027484 (DU PONT DE NEMOURS) 9/02/2006 discloses dispersion compositions comprising synthetic oils or other heat transfer fluids (e.g. fluorine containing refrigerants, in particular HCFC and HFC), fine particles and a dispersant. The dispersion compositions have improved thermal conductivity properties, which may translate to improved energy efficiency performance in a variety of heat transfer applications.

Nevertheless, these solutions have encountered significant issues in industrial implementation. Actually, obtaining stable dispersions of nano-sized metallic, metal oxide or other particles in a fluorinated heat exchange medium is not an easy task; such dispersions have a limited shelf life and undergo settling phenomena, thus practically nullifying heat exchange increase.

There is thus a current shortfall in the art of heat transfer fluids based on perfluoropolyether (PFPE) heat exchange materials which possess outstanding heat exchange properties, long shelf life and stability, and which still exhibit all advantageous features of PFPE heat exchange fluids.

Compositions comprising fluorinated compounds, in particular perfluoropolyether materials and nanoparticles have been taught in the past as magnetic fluids; See for instance US 6106946 (MATSUMOTO) 22/08/2000 US 2004182099 (IND TECH RES INST) 23/09/2004, US 5785882 (NOK CORPORATION) 28/07/1998 , US 5558803 (NIPPON SHOKUBAI CO.) 24/09/1996, US 5487840 (NSK LTD) 30/01/1996, US 6815063 (NANOMAGNETICS, LTD) 9/11/2004.
Paper by Lee et al. entitled Assessment of the effectiveness of nanofluids for single-phase and two-phase heat transfer in micro-channels', published in International Journal of Heat and Mass Transfer, Pergamon Press, GB, vol. 50, no. 3-4, pages 452-453) is directed to the investigation of heat transfer effectiveness of nanofluids based on water and a fluorinated ether, namely HFE 7100 from 3M.

US 2007/158610 discloses a heat transfer fluid comprising surface modified carbon nanoparticles in a liquid fluid (water, glycol, oils, silicon oils).

### Disclosure of Invention

It is thus on an object of the present invention a method for transferring heat comprising using a heat transfer composition comprising:
- at least one fluorinated ether fluid free from functional groups (fluid (H));
- from 0.01 to 5 % wt with respect to fluid (H) of at least one solid nano-sized additive chosen among metal, metal oxide or carbonaceous material particles, having an average particle size of less than 2 000 nm (additive (N));
- from 0.1 to 10 % wt with respect to fluid (H) of at least one functional (per)fluoropolyether comprising recurring units (R1), said recurring units comprising at least one ether linkage in the main chain and at least one fluorine atom (fluoropolyoxyalkene chain) and comprising at least one functional group (functional PFPE (F)).

The expression "at least one fluorinated ether fluid free from functional groups (fluid (H))" is meant to encompass composition comprising one or more than one (i.e. mixtures) fluid (H). In the rest of the text, the term fluid (H) shall be understood both in the singular and in the plural, so as to designate one or more than one fluid (H).

The fluid (H) of the invention is a chemical compound comprising carbon, fluorine, and one or more ether oxygen atoms. The fluid (H) can be straight-chained, branched-chained, or cyclic, or a combination thereof, such as alkylcycloaliphatic. Optionally fluid (H) can comprise hydrogen atoms and/or halogen atoms.

The fluorinated ether fluid free from functional groups (fluid (H)) preferably complies with formula (I A) or (I B) here below:

R^{H}'O-(R^{H}_{f})ᵣ-R^{H}(IA)R^{H}'O-J-(O)ⱼ-R^{H} (IB)

wherein:
- R^{H}' and R^{H}, equal or different from each other, are independently chosen among -CₘF₂ₘ₊₁, -CₙF₂ₙ₊₁₋ₕHₕ, -CₚF_{2p+1-h'}X_{h'}, -C_{z}F_{2z}OC_{y}F_{2y+1}, -CᵤF_{2u-u'}H_{u'} OC_{w}F_{2w+1-w'}H_{w'} groups, with n, m, p, z, y, u, w being integers from 1 to 8, preferably from 1 to 7, h, h', u' and w' being integers ≥ 1, chosen so that h ≤ 2n+1, h' ≤ 2p+1, u' ≤ 2u, w' ≤ 2w+1, X being a halogen atom chosen among Cl, Br, I (preferably a chlorine atom);
- R^{H}_{f} is a fluoropolyoxyalkene chain comprising repeating units R^{H}°, said repeating units being chosen among the group consisting of:
   (i) -CFXO-, wherein X is F or CF₃,
   (ii) -CF₂CFXO-, wherein X is F or CF₃,
   (iii) -CFXCF₂O-, wherein X is F or CF₃,
   (iv) -CF₂CF₂CF₂O-,
   (v) -CF₂CF₂CF₂CF₂O-;
- r is equal to zero or 1, preferably r being 1;
- J is a divalent hydrocarbon radical having 1 to 12 carbon atoms, linear or branched, aliphatic or aromatic, preferably an aliphatic divalent hydrocarbon group having 1 to 6 carbon atoms, e.g. -CH₂-, -CH₂CH₂- or -CH(CH₃)-;
- j is equal to zero or 1.

The fluid (H) of the invention is preferably a hydrofluoroether (fluid (HFE)), i.e. a compound comprising, in addition to carbon, fluorine, and ether oxygen atom(s), one or more hydrogen atoms.
Fluids (HFE) are particularly preferred in view of their outstanding combination of good heat transfer performances over a wide liquid temperature range along with optimum safety (non-flammability and low toxicity) and environmental (low-ozone depleting and low global warming) properties.

Fluid (HFE) typically complies with formula (IIA) or (IIB) here below:

R^{H*'}O-(R^{H}_{f})ᵣ-R^{H*}(IIA)R^{H*'}O-J-(O)ⱼ-R^{H*} (II B)

wherein:
- R^{H*'} and R^{H*}, equal or different from each other, are independently chosen among -CₘF₂ₘ₊₁, -CₙF₂ₙ₊₁₋ₕHₕ, -C_{z}F_{2z}OC_{y}F_{2y+1}, -CᵤF_{2u-u'}H_{u'}OC_{w}F _{2w+1-w'}H_{w'} groups, with n, m, z, y, u, w being integers from 1 to 8, preferably from 1 to 7, h, u' and w' being integers ≥ 1, chosen so that h ≤ 2n+1, u' ≤ 2u, w' ≤ 2w+1, with the provision that at least one of R^{H*'} and R^{H*} in formula (II A) is a -CₙF₂ₙ₊₁₋ₕHₕ group or a -CᵤF_{2u-u'}H_{u'}OC_{w}F_{2w+1-w'}H_{w'} group, as above defined;
- R^{H}_{f}, J, j and r have the same meaning as above defined.

According to a first embodiment of the invention, fluid (HFE) complies to formula (II A) as above described, wherein r is zero, that is to say that fluid (HFE) complies with formula (III A-1) here below (fluid (HFE-1)): R^{H*'}O-R^{H*} (III A-1), wherein R^{H*'} and R^{H*} have the same meaning as above described.

Representative compounds of fluids (HFE-1) described by formula (III A-1) useful in the present invention include, but are not limited to, the following compounds and mixtures thereof: n-C₅F₁₁OC₂H₅, n-C₆F₁₃OCH₃, n-C₆F₁₃ OC₂H₅, n-C₇F₁₅OCH₃, n-C₇F₁₅OC₂H₅, C₂F₅CF(OC₂H₅)CF(CF₃)₂, C₃F₇ CF(OC₂H₅)CF(CF₃)₂, C₃F₇CF(OCH₃)CF(CF₃)₂, C₅F₁₁CF(CF₃)CF₂OCH₃, C₆ F₁₃CF(CF₃)CF₂OCH₃, C₇F₁₅OC₂F₄H, C₆F₁₃OC₂F₄H, H(CF₂)₄O(CF₂)₄H.

According to a second preferred embodiment of the invention, fluid (HFE) complies to formula (II A) as above described, wherein r is 1, that is to say that fluid (HFE) complies with formula (III A-2) (fluid (HFE-2)):

R^{H*'}O-R^{H}_{f}-R^{H*} (III A-2),

wherein R^{H*'}, R^{H}_{f}, R^{H*} have the same meaning as above defined.

In the fluid (HFE-2) of the second preferred embodiment of the invention, R^{H}_{f} is preferably chosen among the followings:
1) -(CF₂O)ₐ-(CF₂CF₂O)_{b}-, with a and b being integers up to 100, a≥0, b≥0 and a+b > 0; preferably, each of a and b being > 0, and b/a being comprised between 0.1 and 10;
2) -(CF₂-(CF₂)_{z'}-CF₂O)_{b'}-, wherein z' is an integer equal to 1 or 2; b' being an integer up to 100;
3) -(C₃F₆O)_{c}-(C₂F₄O)_{b}-(CFL₀O)ₜ-, with L₀ being, at each occurrence independently selected among -F and -CF₃; b, t, and c being integers up to 100, c > 0, b ≥ 0, t ≥0; preferably, b and t >0, c/b being comprised between 0.2 and 5.0 and (c+b)/t being comprised between 5 and 50.

In the fluid (HFE-2) of the second embodiment of the invention, R^{H*'} and R H*, equal or different from each other, are preferably independently chosen among -C_{m°}F_{2m°+1} and -C_{n°}F_{2n°}H groups, with n° and m° being integers from 1 to 3, with the provision that at least one of R^{H*'} and R^{H*} is a -C_{n°}F_{2n°} H group, as above defined.

Non limitative examples of fluids (HFE-2) are those notably complying with general formulae: HCF₂O(CF₂CF₂O)CF₂H; HCF₂O(CF₂CF₂O)₂CF₂H; HCF₂ O(CF₂CF₂O)₃CF₂H; HCF₂O(CF₂CF₂O)₄CF₂H; HCF₂O(CF₂CF₂O)₃CF₂OCF₂ H; HCF₂O(CF₂CF₂O)₄CF₂OCF₂H; CF₃O(CF₂CF₂O)₂CF₂H; CF₃O(CF₂CF₂ O)₂(CF₂O)CF₂H; CF₃O(CF₂CF(CF₃)O)₂CF₂H; CF₃O(CF₂CF(CF₃)O)₃CF₂H; CF₃O(C₃F₆O)₂(CF(CF₃)O)CF₂H; HCF₂CF₂O(CF₂CF₂O)CF₂CF₂H; HCF₂CF₂ OCF₂C(CF₃)₂CF₂OCF₂CF₂H.

According to a third embodiment of the invention, fluid (HFE) complies to formula (II B) as above described, wherein R^{H*'} and R^{H*}, equal or different from each other, are independently chosen among -CₘF₂ₘ₊₁, -CₙF₂ₙ₊₁₋ₕHₕ groups and -CᵤF_{2u'-u'}H_{u'}OC_{w}F_{2w+1-w'}H_{w'} groups, as above described (fluid (HFE-3)).

Non-limitative examples of fluid (HFE-3) according to this third embodiment are notably CF₃CFHCF₂CH₂OCF₂CFHCF₃, CF₃CFHCF₂ CH(CH₃)OCF₂CFHCF₃, CF₃CF(CH₂OCF₂CFHCF₃)CFHCF(CF₃)₂, CF₃ CFHCF(CH₂OCF₂CFHCF₃)CF(CF₃)₂, CF₃CF[CH(CH₃)OCF₂CFHCF₃ ]CFHCF(CF₃)₂, CF₃CF[CH(CH₃)OCF₂CFHCF₃]CFHCF₂CF₃, CF₃CF₂ CF[CH(CH₃)OCF₂CFHCF₃]CFHCF₃, CF₃CFHCF₂C(CH₃)₂OCF₂CFHCF₃, CF₃CFHCF₂CH₂OCF₂CFHOC₄F₉, CF₃CFHCF₂CH(OCF₂CFHCF₃)CH₂OCF ₂CFHCF₃, CF₃CFHCF₂CH₂OCF₂CFHOC₃F₇, CF₃CFHCF₂CH₂OCF₂ CFHOCF₃, CF₃CF₂CF₂OCH₂CH₂CH₂OCF₂CF₂CF₃, CF₃CF₂CF₂CF₂OCH₂ CH₂CH₂OCF₂CF₂CF₂CF₃, CF₃CF₂CF₂OCH₂CH₂OCF₂CF₂CF₃, CF₃CF₂CF₂ CF₂CF₂OCH₂CH₂CH₂OCF₂CF₂CF₂CF₂CF₃, CF₃CF₂CF[CF(CF₃)₂]OCH₂CH ₂CH₂OCF[CF(CF₃)₂]CF₂CF₃.

Fluids (HFE-3) according to this third embodiment of the invention are notably those disclosed in US 2007051916 (3M INNOVATIVE PROPERTIES CO) 08.03.2007 or in US 2005126756 (3M INNOVATIVE PROPERTIES CO) 16.06.2005.

### Additive (N)

The term nanosized, as used therein, is intended to denote particles which have an average size of up to 2 000 nm.

Preferred particle size is influenced by a number of factors, including cost effectiveness, dispersion and settling characteristics (smaller particles tending to settle more slowly and being more easily (re)-dispersed) and easiness of handling, nanosized particles undergoing aggregation more and more significant phenomena as a function of their reduced size.

Preferred nanosized additives have an average particle size of from 1 nm to 500 nm.

Exemplary metal-based additives (N) include notably nanoparticles of copper, aluminium, titanium, nickel, beryllium, silver, gold or iron, alloys or blends, or compounds thereof. Copper, nickel, silver and beryllium are particularly preferred as metal-based additives (N).

Metal-based additives (N) particularly suitable to the purpose of the invention are those prepared according to the teachings of US 2006226564 12.10.2006 and US 2006269823 30:11.2006, i.e. via a method comprising (i) feeding a metal, (ii) vaporizing said metal, and (iii) cooling the same, preferably by introduction of a flow of cooling fluid to interact with the vaporized metal.

Metal-based additives (N) obtained from above mentioned process are typically at least partially surrounded by a thin metal oxide coating whose presence does not substantially modify properties of the metal particle.

Metal-based additives (N) have preferably an average particle size of less than 100 nm, preferably of 5 to 80 nm, more preferably of 10 to 70 nm.

Metal-based additives (N) particularly suitable to the purposes of the invention are those sold under the trade name QUANTUMSPHERE^{®}, e.g. QSI-Nano^{®} Copper, QSI-Nano^{®} Silver, QSI-Nano^{®} Nickel from QuantumSphere, Inc.

Exemplary metal oxide-based additives (N) include notably magnesium oxide (MgO), alumina (Al₂O₃), silicon dioxide (SiO₂), titanium dioxide (TiO₂ ), iron dioxide (Fe₂O₃ or FeO), copper oxide (Cu₂O), Zinc oxide (ZnO), zirconium oxide (ZrO₂), stannic oxide (SnO₂) and cerium oxide (CeO₂).

Preferred metal oxide-based additives (N) are chosen among magnesium oxide (MgO), alumina (Al₂O₃), silicon dioxide (SiO₂), titanium dioxide (TiO₂ ), and Zirconium dioxide (ZrO₂).

Metal oxide-based additives (N) have preferably an average particle size of 1 to 500 nm, preferably of 5 to 300 nm, more preferably of 10 to 250 nm.

Exemplary carbonaceous material-based additives (N), include notably graphite, diamond, fullerene carbons of general formula C₂ₙ, with n being an integer of at least 30 and carbon nanotubes. Particularly preferred as carbonaceous material-based additives (N) are carbon nanotubes, which exhibit outstanding potential in heat exchange enhancement.

Preferred carbon nanotubes are those having an average primary particle size from 10 to 30 nm.

The table here below summarized room temperature thermal conductivity for preferred additives (N) to be used in the composition of the invention:

**Table 1**

| Additive (N) | Intrinsic Thermal Conductivity at r.t. (W m⁻¹ K⁻¹) |
|---|---|
| Metal-based additives (N) | |
| Silver | 430 |
| Copper | 400 |
| Aluminium | 235 |
| Beryllium | 190 |
| Nickel | 91 |

| Metal oxide-based additives (N) | |
|---|---|
| silica | 1.2÷1.4 |
| MgO | 13÷15 |
| Al₂O₃ | 10÷12 |
| TiO₂ / ZrO₂ | 2÷4 |

| Carbonaceous-based additives | |
|---|---|
| graphite | 110 ÷ 190 |
| Carbon nanotubes | 1 800 ÷ 2 000 |

Preferred materials for additives (N) are those having a high heat transfer coefficient and high thermal conductivity per unit weight of material. It is thus understood that additives (N) will be generally chosen among metal-based additives and carbonaceous material-based additives.

Most preferably, the additive (N) is chosen among carbon nanotubes. Both single-walled nanotubes (SWNTs), multi-walled nanotubes (MWNTs) and mixtures therefrom can be useful with success.

The expression "at least one functional (per)fluoropolyether (...) (functional PFPE (F))" is meant to encompass composition comprising one or more than one (i.e. mixtures) functional PFPE (F). In the rest of the text, the term functional PFPE (F) shall be understood both in the singular and in the plural, so as to designate one or more than one functional PFPE (F).

Preferably the functional PFPE (F) is a compound complying with formula (IV) here below:

T₁-(CFX)ₚ-O-R_{f}-(CFX)_{p'}-T₂ (IV)

wherein :
- each of X is independently F or CF₃;
- p and p', equal or different each other, are integers from 0 to 3;
- R_{f} is a fluoropolyoxyalkene chain comprising repeating units R°, said repeating units being chosen among the group consisting of:
   (i) -CFXO-, wherein X is F or CF₃,
   (ii) -CF₂CFXO-, wherein X is F or CF₃,
   (iii) -CF₂CF₂CF₂O-,
   (iv) -CF₂CF₂CF₂CF₂O-,
   (v) -(CF₂)ₖ-CFZ-O- wherein k is an integer from 0 to 3 and Z is a group of general formula -OR_{f}'T₃, wherein R_{f}' is a fluoropolyoxyalkene chain comprising a number of repeating units from 0 to 10, said recurring units being chosen among the followings : -CFXO-, -CF₂CFXO-, -CF₂CF₂CF₂ O-, -CF₂CF₂CF₂CF₂O-, with each of each of X being independently F or CF₃; and T₃ is a C₁ - C₃ perfluoroalkyl group,
   and mixtures thereof;
- at least one of T₁ and T₂, which are the same or different each other, is a functional group comprising a heteroatom chosen among O, S, N, P and mixtures thereof; the remaining T₁ or T₂, if any, being chosen among H, halogen atoms, C₁ - C₃₀ end-group.

Suitable examples of T₁ and T₂ groups comprising at least one heteroatom chosen among O, S, N, P heteroatoms are those complying with formula (V):

-Aq-E (V)

wherein :
A denotes a C₁-C₂₀ linking group; q is 0 or 1; E denotes a functional group comprising at least one heteroatom chosen among O, S, N, P and mixtures thereof.

The bivalent C₁-C₂₀ linking group A is preferably selected from the following classes :
1. linear substituted or unsubstituted C₁-C₂₀ alkylenic chain, optionally containing heteroatoms in the alkylenic chain; preferably linear aliphatic group of formula -(CH₂)ₘ-, with m integer between 1 and 20;
2. (alkylene)cycloaliphatic C₁-C₂₀ groups or (alkylen)aromatic C₁-C₂₀ groups, optionally containing heteroatoms in the alkylenic chain or in the ring;
3. linear or branched polyalkylenoxy chains, comprising in particular repeating units selected from : -CH₂CH₂O-, -CH₂CH(CH₃)O-, -(CH₂)₃O-, -(CH₂)₄O-;
4. the carbonyl group -C(O)-;
and mixtures thereof.

Non limitative examples of functional groups E are notably hydroxyl group, -OPO(OH)₂, -NR"₃)X", with X" being an hydroxyl or halogen atom and each of the R" group being independently a hydrogen atom or C₁-C₂₀ alkyl group, -SO₃)_{w}X' and/or -COO)_{w}X', wherein X' is an alkaline or alkaline earth metal or an ammonium salt of formula NR"₄, with each of the R" group being independently a hydrogen atom or C₁-C₂₀ alkyl group and w being 1 or 2 for satisfying neutrality.

Suitable examples of T₁ or T₂ non functional groups, free from O, S, N, P heteroatoms, are notably -H, -F, -Cl, -CF₃, -C₂F₅, -CF₂Cl, -CF₂CF₂Cl.

More preferably, the functional PFPE (F) suitable for the invention are chosen among the group consisting of :
1. [X-(CF₂CF(CF₃)O)ₙCF₂COO⁻]M, with X being a halogen, preferably Cl or F, M being a univalent cation such as H⁺, Na⁺, K⁺, NH₄⁺ and n being an integer ranging between 2 and 100, preferably between 2 and 60;
2. [X-(CF₂CF(CF₃)O)ₙCF₂COO⁻]₂M", with X being a halogen, preferably Cl or F, M" being a divalent cation such as Ca⁺⁺, Mg⁺⁺, Zn⁺⁺, and n being an integer ranging between 2 and 100, preferably between 2 and 60;
3. (HO)₂OP-O(CH₂CH₂O)_{p*}-CH₂CF₂O-(CF₂CF₂O)_{m'}(CF₂O)_{n'}-CF₂CH₂O(CH₂ CH₂O)_{p*}-PO(OH)₂, m' and n' being integers, where the ratio m'/n' generally ranges between 0.1 and 10, preferably between 0.2 and 5 and the sum m'+n' ranging between 2 and 100, preferably between 2 and 60, and p* ranges between 0 and 3, preferably between 1 and 3.
4. HO-CH₂CF₂O(CF₂O)_{n"}(CF₂CF₂O)_{m"}CF₂CH₂-OH, m" and n" being integers, where the ratio m"/n" generally ranges between 0.1 and 10, preferably between 0.2 and 5, and the sum m"+n" ranging between 2
   and 100, preferably between 2 and 60;
5. HO(CH₂CH₂O)_{n*}CH₂CF₂O(CF₂O)_{n*'}(CF₂CF₂O)_{m*'} CF₂CH₂(OCH₂CH₂)_{n*}OH, n*, m*' and n*' being integers, where the ratio m*'/n*' generally ranges between 0.1 and 10, preferably between 0.2 and 5, and n* ranges between 1 and 3, and the sum m*'+n*' ranging between 2 and 100, preferably between 2 and 60;
6. M'OOC-CF₂O-(CF₂O)_{n"'}(CF₂CF₂O)_{m"'}CF₂COOM, with M being a univalent cation such as H⁺, Na⁺, K⁺, NH₄⁺ and m"' and n"' being integers, where the ratio m"'/n"' generally ranges between 0.1 and 10, preferably between 0.2 and 5, and the sum m"'+n"' ranging between 2 and 100, preferably between 2 and 60.

Particularly preferred are functional PFPEs (F) above listed under point 4, i.e. those complying with formula HO-CH₂CF₂O(CF₂O)_{n"}(CF₂CF₂O)_{m"} CF₂CH₂-OH, as above described.

The heat transfer composition as above detailed can be manufactured as follows.

The process advantageously comprises mixing the fluid (H), the additive (N) and the functional PFPE (F).

Generally the three components may be intimately admixed by standard mixing devices.

Ultrasound mixing is particularly preferred, especially when carbon nanotubes are used as additive (N).

Thus, the process of the invention advantageously comprises mixing by sonication.

According to an embodiment of the invention, the process advantageously comprises:
- mixing the functional PFPE (F) with the additive (N) so as to obtain treated additive (N) particles having on their surface the functional PFPE (F); and
- dispersing the so-obtained treated additive (N) in the fluid (H).

The compositions of the invention, thanks to their improved thermal conductivity properties, which may translate to improved energy efficiency performance in a variety of heat transfer dependant applications, can be used with success as heat transfer media in applications such as vapour compression air conditioning and refrigeration systems of all types, secondary heat transfer fluids, and other heating or cooling fluid applications.

The invention will be now described in more detail with reference to the following examples whose purpose is merely illustrative and not limitative of the scope of the invention.

### Raw materials

As additive (N), two types of carbon nanotubes were used: a multi wall carbon nanotube (MWCNT), namely BAYTUBES^{®} C150 P available from Bayer Material Science AG and a single wall carbon nanotube (SWCNT), commercially available from Sigma-Aldrich.

As functional PFPE (F), FOMBLIN^{®}ZDOL 2000 (complying with formula HO-CH₂CF₂O(CF₂O)_{n"}(CF₂CF₂O)_{m"}CF₂CH₂-OH and having an average molecular weight of 2 000), commercially available from Solvay Solexis S.p.A. was used.

As fluid (H) used was made of H-GALDEN^{®} ZT130 (mixture of hydrofluoroether having boiling point of 130°C, mainly complying with formula HCF₂O(CF₂CF₂O)₃CF₂OCF₂H) and GALDEN^{®} HT 170 (represented by formula CF₃O(CF₂-CF(CF₃)O)ₙ(CF₂O)ₘCF₃ wherein n/m=20 having average molecular weight 450), all commercially available from Solvay Solexis S.p.A..

### Preparation of the dispersions

All dispersions were prepared according to the following procedure:
weighed amounts of carbon nanotube and dispersing agent were added to the base fluid; the mixture was stirred with a Vibromixer and then treated with an ultrasound disintegrator (Hielscher UP 200S, power=200W, operating frequency=24kHz) for 5 minutes at 0°C in order to avoid overheating and consequent evaporation of the fluid.

The stability of the dispersions was checked after the preparation by centrifugation at 1000 rpm for 5 minutes: the dispersion is considered stable if no precipitate is observed after centrifugation.

The different compositions of the dispersions prepared are summarized in Table 2 (Examples 1-8). All these dispersions were stable, according to the above reported stability test.

Comparative compositions of examples 1C to 4C, free from additive (N) were also tested for stability and/or thermal conductivity.

Comparative compositions of examples 5C and 6C were found as not possessing a suitable stability in above mentioned test. It was thus not possible to properly examine their thermal properties.

Thermal conductivity measurements were carried out following the hot wire method as detailed, e.g. in ASTM C 1113-99 standard.

The apparatus for the measurement of the thermal conductivity of compositions was based on the principles stated in the ASTM methods D5930 (Standard Test Method for Thermal Conductivity of Plastics by Means Transient Line-Source Technique) and C1113 of a (Standard Test Method for Thermal Conductivity of Refractories by Hot Wire (Platinum Resistance Thermometer Technique), with some refinements suggested by the literature on the transient hot-wire method on liquid samples.

Thermal conductivity of the composition was evaluated by monitoring the transient temperature rise of a thin Platinum wire, obtained from the measurement of the wire electrical resistance versus time, the rate of heating of the wire being related to the thermal properties of the fluid.

Results obtained are summarized in Table 3.

**Table 2**

| **Example** | **Multiwall CNT (g)** | **Singlewall CNT (g)** | **Functional PFPE (F) (g)** | **Fluid (H) Type^{(§)} & quantity (g)** | |
|---|---|---|---|---|---|
| 1C | - | - | - | (1) | 100 |
| 2C | - | - | 100 | - | - |
| 3C | - | - | 1 | (1) | 99 |
| 4C | - | - | 10 | (1) | 90 |
| 5C | 0.1 | - | - | (1) | 99.9 |
| 6C | - | 0.1 | - | (1) | 99.9 |
| 1 | 0.1 | - | 1 | (1) | 98.9 |
| 2 | 0.1 | - | 1 | (2) | 98.9 |
| 3 | - | 0.1 | 1 | (1) | 98.9 |
| 4 | 0.1 | - | 10 | (1) | 89.9 |
| 5 | - | 0.1 | 10 | (1) | 89.9 |
| 6 | - | 0.3 | 10 | (1) | 89.7 |
| 7 | - | 0.5 | 10 | (1) | 89.5 |
| 8 | - | 1 | 10 | (1) | 89.5 |

| | | | | | |
|---|---|---|---|---|---|
| (§): (1) denotes H-GALDEN^{®} ZT 130 hydrofluoroether; (2) denotes GALDEN^{®} HT 170. | | | | | |

**Table 3**

| Heat exchange fluid composition | λ (W/mK) | Std devl (W/mK) | Δλ/λ (%) |
|---|---|---|---|
| 1C | 0.073 | 0.014 | - |
| 2C | 0.089 | 0.009 | - |
| 3C | 0.071 | 0.005 | - |
| 1 | 0.077 | 0.004 | 8 |
| 3 | 0.076 | 0.003 | 7 |
| 4C | 0.075 | 0.005 | - |
| 6 | 0.086 | 0.004 | 15 |
| 8 | 0.082 | 0.002 | 9 |

## Claims

1. A method for transfeering heat comprising using a heat transfer composition comprising:
- at least one fluorinated ether fluid free from functional groups (fluid (H));
- from 0.01 to 5 % wt with respect to fluid (H) of at least one solid nano-sized additive chosen among metal, metal oxide or carbonaceous material particles, having an average particle size of less than 2 000 nm (additive (N));
- from 0.1 to 10 % wt with respect to fluid (H) of at least one functional (per)fluoropolyether comprising recurring units (R1), said recurring units comprising at least one ether linkage in the main chain and at least one fluorine atom (fluoropolyoxyalkene chain), and comprising at least one functional group (functional PFPE (F)).

2. The method of claim 1, wherein the fluid (H) complies with formula (I A) or (I B) here below:
R^{H'}O-(R^{H}_{f})ᵣ-R^{H} (IA)
R^{H'}O-J-(O)ⱼ-R^{H} (IB)
wherein:
- R^{H}' and R^{H}, equal or different from each other, are independently chosen among -CₘF₂ₘ₊₁, -CₙF₂ₙ₊₁₋ₕHₕ, -CₚF_{2p+1-h'}X_{h'}, -C_{z}F_{2z}OC_{y}F_{2y+1}, -CᵤF_{2u-u'}H_{u'} OC_{w}F_{2w+1-w'}H_{w'} groups, with n, m, p, z, y, u, w being integers from 1 to 8, h, h', u' and w' being integers ≥ 1, chosen so that h ≤ 2n+1, h' ≤ 2p+1, u' ≤ 2u, w' ≤ 2w+1, X being a halogen atom chosen among Cl, Br, I;
- R^{H}_{f} is a fluoropolyoxyalkene chain comprising repeating units R^{H°}, said repeating units being chosen among the group consisting of :
(i) -CFXO-, wherein X is F or CF₃,
(ii) -CF₂CFXO-, wherein X is F or CF₃,
(iii)-CFXCF₂O-, wherein X is F or CF₃,
(iv)-CF₂CF₂CF₂O-,
(v) -CF₂CF₂CF₂CF₂O-;
- r is equal to zero or 1;
- J is a divalent hydrocarbon radical having 1 to 12 carbon atoms, linear or branched, aliphatic or aromatic;
- j is equal to zero or 1.

3. The method of claim 2, wherein the fluid (H) is a hydrofluoroether (fluid (HFE)) comprising, in addition to carbon, fluorine, and ether oxygen atom(s), one or more hydrogen atoms.

4. The method of claim 3, wherein the fluid (HFE) complies with formula (IIA) or (II B) here below:
R^{H*'}O-(R^{H}_{f})ᵣ-R^{H*} (II A)
R^{H*'}O-J-(O)ⱼ-R^{H*} (II B)
wherein:
- R^{H*'} and R^{H*}, equal or different from each other, are independently chosen among -CₘF₂ₘ₊₁, -CₙF₂ₙ₊₁₋ₕHₕ, -C_{z}F_{2z}OC_{y}F_{2y+1}, -CᵤF_{2u-u'}H_{u'}OC_{w}F_{2w+1-w'}H_{w'} groups, with n, m, z, y, u, w being integers from 1 to 8, h, u' and w' being integers ≥ 1, chosen so that h ≤ 2n+1, u' ≤ 2u, w' ≤ 2w+1, with the provision that at least one of R^{H*'} and R^{H*} in formula (II A) is a -CₙF₂ₙ₊₁₋ₕHₕ group or a - CᵤF_{2u-u'}H_{u'}OC_{w}F_{2w+1-w'}H_{w'} group, as above defined;
- R^{H}_{f}, J, j and r have the same meaning as defined in claim 2.

5. The method of claim 4, wherein fluid (HFE) complies to formula (II A) as defined in claim 3, wherein r is 1.

6. The method of claim 5, wherein R^{H}_{f} is chosen among the followings:
1) -(CF₂O)ₐ-(CF₂CF₂O)_{b}-, with a and b being integers up to 100, a≥0, b ≥0 and a+b > 0;
2) -(CF₂-(CF₂)_{z'}-CF₂O)_{b'}-, wherein z' is an integer equal to 1 or 2; b' being an integer up to 100;
3) -(C₃F₆O)_{c}-(C₂F₄O)_{b}-(CFL₀O)ₜ-, with L₀ being, at each occurrence independently selected among -F and -CF₃; b, t, and c being integers up to 100, c > 0, b ≥ 0, t ≥ 0.

7. The method according to anyone of the preceding claims, wherein the additive (N) is chosen among carbon nanotubes.

8. The method according to anyone of the preceding claims, wherein the functional PFPE (F) is a compound complying with formula (IV) here below :
T₁-(CFX)ₚ-O-R_{f}-(CFX)_{p'}-T₂ (IV)
wherein :
each of X is independently F or CF₃;
p and p', equal or different each other, are integers from 0 to 3;
R_{f} is a fluoropolyoxyalkene chain comprising repeating units R°, said repeating units being chosen among the group consisting of :
(i) -CFXO-, wherein X is F or CF₃,
(ii) -CF₂CFXO-, wherein X is F or CF₃,
(iii)-CF₂CF₂CF₂O-,
(iv)-CF₂CF₂CF₂CF₂O-,
(v)-(CF₂)ₖ-CFZ-O- wherein k is an integer from 0 to 3 and Z is a group of general formula -OR_{f}'T₃, wherein R_{f}' is a fluoropolyoxyalkene chain comprising a number of repeating units from 0 to 10, said recurring units being chosen among the followings : -CFXO-, -CF₂CFXO-, -CF₂CF₂CF₂O-,-CF₂CF₂CF₂CF₂O-, with each of each of X being independently F or CF₃; and T₃ is a C₁ - C₃ perfluoroalkyl group,
and mixtures thereof;
at least one of T₁ and T₂, which are the same or different each other, is a functional group comprising a heteroatom chosen among O, S, N, P and mixtures thereof; the remaining T₁ or T₂, if any, being chosen among H, halogen atoms, C₁ - C₃₀ end-group.

9. The method according to claim 8, wherein the functional PFPE (F) is selected from the group consisting of :
1. [X-(CF₂CF(CF₃)O)ₙCF₂COO⁻]M, with X being a halogen, M being a univalent cation such as H⁺, Na⁺, K⁺, NH₄⁺ and n being an integer ranging between 2 and 100;
2. [X-(CF₂CF(CF₃)O)ₙCF₂COO⁻]₂M", with X being a halogen, M" being a divalent cation such as Ca⁺⁺, Mg⁺⁺, Zn⁺⁺, and n being an integer ranging between 2 and 100;
3. (HO)₂OP-O(CH₂CH₂O)_{p*}-CH₂CF₂O-(CF₂CF₂O)_{m'}(CF₂O)_{n'}-CF₂CH₂O(CH₂CH₂O)_{p*}-PO(OH)₂, m' and n' being integers, where the ratio m'/n ' generally ranges between 0.1 and 10 and the sum m'+n' ranging between 2 and 100, and p* ranges between 0 and 3.
4. HO-CH₂CF₂O(CF₂O)_{n"}(CF₂CF₂O)_{m"}CF₂CH₂-OH, m" and n" being integers, where the ratio m"/n" ranges between 0.1 and 10, and the sum m"+n" ranging between 2 and 100;
5. HO(CH₂CH₂O)_{n*}CH₂CF₂O(CF₂O)_{n*'}(CF₂CF₂O)_{m*'}CF₂CH₂(OCH₂CH₂)_{n*}OH, n*, m*' and n*' being integers, where the ratio m*'/n*' ranges between 0.1 and 10, and n* ranges between 1 and 3, and the sum m*'+n*' ranging between 2 and 100;
6. M'OOC-CF₂O-(CF₂O)_{n"'}-(CF₂CF₂O)_{m"'}CF₂COOM, with M being a univalent cation such as H⁺, Na⁺, K⁺, NH₄⁺ and m"' and n"' being integers, where the ratio m"/n"' generally ranges between 0.1 and 10, and the sum m"'+n"' ranging between 2 and 100.

## Patentansprüche

1. Verfahren zur Übertragung von Wärme, bei dem man eine Wärmeübertragungszusammensetzung verwendet, die Folgendes umfasst :
- mindestens ein fluoriertes Etherfluid, das frei von funktionellen Gruppen ist [Fluid (H)];
- 0,01 bis 5 Gew.-%, bezogen auf Fluid (H), mindestens eines festen nanoskaligen Additivs, das aus Teilchen aus Metall, Metalloxid oder kohlenstoffhaltigem Material mit einer durchschnittlichen Teilchengröße von weniger als 2000 nm ausgewählt ist (Additiv (N));
- 0,1 bis 10 Gew.-%, bezogen auf Fluid (H), mindestens eines funktionellen (Per)fluorpolyethers, umfassend Wiederholungseinheiten (R1), wobei die Wiederholungseinheiten mindestens eine Etherbindung in der Hauptkette und mindestens ein Fluoratom umfassen (Fluorpolyoxyalkenkette) und mindestens eine funktionelle Gruppe umfassen (funktioneller PFPE (F)).

2. Verfahren nach Anspruch 1, bei dem das Fluid (H) der nachstehenden Formel (I A) oder (I B) entspricht :
R^{H}'O-(R^{H}_{f})ᵣ-R^{H} (I A)
R^{H}'O-J-(O)ⱼ-R^{H} (I B)
worin :
- R^{H}' und R^{H} gleich oder voneinander verschieden sind und unabhängig aus - CₘF₂ₘ₊₁-, -CₙF₂ₙ₊₁₋ₕHₕ-, -CₚF_{2p+1-h'}X_{h'}-, -C_{z}F_{2z}OC_{y}F_{2y+1}-, -CᵤF_{2u-u'}H_{u'}OC_{w}F_{2w+1-w'}H_{w'}-Gruppen ausgewählt sind, wobei n, m, p, z, y, u, w für ganze Zahlen von 1 bis 8 stehen, h, h', u' und w' für ganze Zahlen ≥ 1 stehen, die so gewählt sind, dass h ≤ 2n+1, h' ≤ 2p+1, u' ≤ 2u, w' ≤ 2w+1, wobei X für ein aus Cl, Br oder I ausgewähltes Halogenatom steht;
- R^{H}_{f} für eine Fluorpolyoxyalkylenkette, die Wiederholungseinheiten R^{Ho} umfasst, steht, wobei die Wiederholungseinheiten aus der Gruppe bestehend aus :
(i) -CFXO-, worin X für F oder CF₃ steht;
(ii) -CF₂CFXO-, worin X für F oder CF₃ steht;
(iii) -CFXCF₂O-, worin X für F oder CF₃ steht;
(iv) -CF₂CF₂CF₂O-;
(v) -CF₂CF₂CF₂CF₂O-
ausgewählt sind;
- r gleich null oder 1 ist;
- J für einen zweiwertigen Kohlenwasserstoffrest mit 1 bis 12 Kohlenstoffatomen, der linear oder verzweigt, aliphatisch oder aromatisch ist, steht;
- j gleich 0 oder 1 ist.

3. Verfahren nach Anspruch 2, bei dem es sich bei dem Fluid (H) um einen Hydrofluorpolyether (Fluid (HFE)), der neben Kohlenstoff-, Fluor- und Ether-sauerstoffatomen ein oder mehrere Wasserstoffatome umfasst, handelt.

4. Verfahren nach Anspruch 3, wobei das Fluid (HFE) der nachstehenden Formel (II A) oder (II B) entspricht :
R^{H*}'O-(R^{H}_{f})ᵣ-R^{H*} (II A)
R^{H*}'O-J-(O)ⱼ-R^{H*} (II B)
worin :
- R^{H*}' und R^{H*} gleich oder voneinander verschieden sind und unabhängig aus - CₘF₂ₘ₊₁-, -CₙF₂ₙ₊₁₋ₕHₕ-, -C_{z}F_{2z}OC_{y}F_{2y+1}-, -CᵤF_{2u-u'}H_{u'}OC_{w}F_{2w+1}-_{w'}H_{w'}-Gruppen ausgewählt sind, wobei n, m, z, y, u, w für ganze Zahlen von 1 bis 8 stehen, h, u' und w' für ganze Zahlen ≥ 1 stehen, die so gewählt sind, dass h ≤ 2n+1, u' ≤ 2u, w' ≤ 2w+1, mit der Maßgabe, dass mindestens eine der Gruppen R^{H*}' und R^{H*} in Formel (II A) für eine -CₙF₂ₙ₊₁₋ₕHₕ-Gruppe oder eine -CᵤF_{2u-u'}H_{u'}OC_{w}F_{2w+1-w'}H_{w'}-Gruppe gemäß obiger Definition steht;
- R^{H}_{f}, J, j und r die gleiche Bedeutung wie in Anspruch 2 besitzen.

5. Verfahren nach Anspruch 4, bei dem das Fluid (HFE) der Formel (II A) gemäß Anspruch 3, worin r für 1 steht, entspricht.

6. Verfahren nach Anspruch 5, bei dem R^{H}_{f} aus den folgenden Gruppen ausgewählt ist :
1) -(CF₂O)ₐ-(CF₂CF₂O)_{b}-, wobei a und b für ganze Zahlen bis 100 stehen, a ≥ 0, b ≥ 0 und a + b > 0;
2) -(CF₂-(CF₂)_{z'}-CF₂O)_{b}-, wobei z' für eine ganze Zahl mit einem Wert von 1 oder 2 steht; wobei b' für eine ganze Zahl bis 100 steht;
3) -(C₃F₆O)_{c}-(C₂F₄O)_{b}-(CFL₀O)ₜ-, wobei L₀ jeweils unabhängig aus -F und - CF₃ ausgewählt ist; b, t c für ganze Zahlen bis 100 stehen, c > 0, b ≥ 0, t ≥ 0.

7. Verfahren nach einem der vorhergehenden Ansprüche, bei dem das Additiv (N) aus Kohlenstoffnanoröhren ausgewählt ist.

8. Verfahren nach einem der vorhergehenden Ansprüche, bei dem der funktionelle PFPE (F) eine Verbindung ist, die der nachstehenden Formel (IV) entspricht :
T₁-(CFX)ₚ-O-R_{f}-(CFX)_{p'}-T₂ (IV)
worin :
X jeweils unabhängig voneinander für F oder CF₃ steht;
p und p' gleich oder voneinander verschieden sind und für ganze Zahlen von 0 bis 3 stehen;
R_{f} für eine Fluorpolyoxyalkenkette, die Wiederholungseinheiten R° umfasst, steht, wobei die Wiederholungseinheiten aus der Gruppe bestehend aus :
(i) -CFXO-, worin X für F oder CF₃ steht,
(ii) -CF₂CFXO, worin X für F oder CF₃ steht,
(iii) -CF₂CF₂CF₂O-,
(iv) -CF₂CF₂CF₂CF₂O-,
(v) -(CF₂)ₖ-CFZ-O-, worin k für eine ganze Zahl von 0 bis 3 steht und Z für eine Gruppe der allgemeinen Formel -OR_{f}'T₃ steht, worin R_{f}' für eine Fluorpolyoxyalkenkette mit einer Zahl von Wiederholungseinheiten von 0 bis 10 steht, wobei die Wiederholungseinheiten aus den folgenden Gruppen ausgewählt sind: -CFXO-, -CF₂CFXO, -CF₂CF₂CF₂O-, -CF₂CF₂CF₂CF₂O-, wobei X jeweils unabhängig für F oder CF₃ steht und
T₃ für eine C₁-C₃-Perfluoralkylgruppe steht,
und Mischungen davon ausgewählt sind;
mindestens eine der Gruppen T₁ und T₂, die gleich oder voneinander verschieden sind, für eine funktionelle Gruppe, die ein aus O, S, N, P und Mischungen davon ausgewähltes Heteroatom umfasst, steht; wobei die gegebenenfalls verbleibende Gruppe T₁ oder T₂ aus H, Halogenatomen und einer C₁-C₃₀-Endgruppe ausgewählt ist.

9. Verfahren nach Anspruch 8, bei dem der funktionelle PFPE (F) aus der Gruppe bestehend aus :
1. [X-(CF₂CF(CF₃)O)ₙCF₂COO⁻]M, wobei X für ein Halogen steht, M für ein einwertiges Kation wie H⁺, Na⁺, K⁺, NH₄⁺ steht und n für eine ganze Zahl im Bereich zwischen 2 und 100 steht;
2. [X-(CF₂CF(CF₃)O)ₙCF₂COO⁻]₂M", wobei X für ein Halogen steht, M" für ein zweiwertiges Kation wie Ca⁺⁺, Mg⁺⁺, Zn⁺⁺ steht und n für eine ganze Zahl im Bereich zwischen 2 und 100 steht;
3. (HO)₂OP-O(CH₂CH₂O)_{p*}-CH₂CF₂O-(CF₂CF₂O)_{m'}(CF₂O)_{n'}-CF₂CH₂O(CH₂CH₂O)_{p*}-PO(OH)₂, wobei m' und n' für ganze Zahlen stehen, wobei das Verhältnis m'/n' im Allgemeinen im Bereich zwischen 0,1 und 10 liegt und die Summe m'+n' im Bereich zwischen 2 und 100 liegt und p* im Bereich zwischen 0 und 3 liegt;
4. HO-CH₂CF₂O(CF₂O)_{n"}(CF₂CF₂O)_{m"}CF₂CH₂-OH, wobei m" und n" für ganze Zahlen stehen, wobei das Verhältnis m"/n" im Bereich zwischen 0,1 und 10 liegt und die Summe m"+n" im Bereich zwischen 2 und 100 liegt;
5. HO(CH₂CH₂O)_{n*}-CH₂CF₂O(CF₂O)_{n*'}(CF₂CF₂O)_{m*'}CF₂CH₂(OCH₂CH₂)_{n*}-OH, wobei n*, m*' und n*' für ganze Zahlen stehen, wobei das Verhältnis m*'/n*' im Bereich zwischen 0,1 und 10 liegt und n* im Bereich zwischen 1 und 3 liegt und die Summe m*'+n*' im Bereich zwischen 2 und 100 liegt;
6. M'OOC-CF₂O-(CF₂O)_{n"'}(CF₂CF₂O)_{m"'}CF₂COOM, wobei M für ein einwertiges Kation wie H⁺, Na⁺, K⁺, NH₄⁺ steht und m'" und n'" für ganze Zahlen stehen, wobei das Verhältnis m"'/n"' im Allgemeinen im Bereich zwischen 0,1 und 10 liegt und die Summe m'"+n'" im Bereich zwischen 2 und 100 liegt;
ausgewählt ist.

## Revendications

1. Procédé de transfert de chaleur comprenant l'utilisation d'une composition de transfert de chaleur comprenant :
- au moins un fluide d'éther fluoré dépourvu de groupes fonctionnels (fluide (H)) ;
- de 0,01 à 5 % en poids, rapporté au fluide (H), d'au moins un additif solide de taille nanométrique choisi parmi des particules de métal, d'oxyde métallique ou de matériau carboné, ayant une taille moyenne de particules de moins de 2000 nm (additif (N)) ;
- de 0,1 à 10 % en poids, rapporté au fluide (H), d'au moins un (per)fluoropolyéther fonctionnel comprenant des motifs récurrents (R1), lesdits motifs récurrents comprenant au moins une liaison éther dans la chaîne principale et au moins un atome de fluor (chaîne fluoropolyoxyalcène), et comprenant au moins un groupe fonctionnel (PFPE fonctionnel (F)).

2. Procédé de la revendication 1, dans lequel le fluide (H) répond à la formule (I A) ou (I B) ci-dessous :
R^{H'}O-(R^{H}_{f})ᵣ-R^{H} (I A)
R^{H'}O-J-(O)ⱼ-R^{H} (I B)
dans lesquelles :
- R^{H'} et R^{H}, identiques ou différents l'un de l'autre, sont indépendamment choisis parmi les groupes -CₘF₂ₘ₊₁, -CₙF₂ₙ₊₁₋ₕHₕ, -CₚF_{2p+1-h'}X_{h'}, -C_{z}F_{2z}OC_{y}F_{2y+1}, -CᵤF_{2u-u'}H_{u'}OC_{w}F_{2w+1-w'}H_{w'}, avec n, m, p, z, y, u, w étant des entiers de 1 à 8, h, h', u' et w' étant des entiers ≥ 1, choisis de telle sorte que h ≤ 2n+1, h' ≤ 2p+1, u' ≤ 2u, w' ≤ 2w+1, X étant un atome d'halogène choisi parmi Cl, Br, I ;
- R^{H}_{f} est une chaîne fluoropolyoxyalcène comprenant des motifs répétitifs R^{H}°, lesdits motifs répétitifs étant choisis dans le groupe constitué par :
(i) -CFXO-, dans lequel X représente F ou CF₃,
(ii) -CF₂CFXO-, dans lequel X représente F ou CF₃,
(iii) -CFXCF₂O-, dans lequel X représente F ou CF₃,
(iv) -CF₂CF₂CF₂O-,
(v) -CF₂CF₂CF₂CF₂O- ;
- r est égal à zéro ou 1 ;
- J est un radical hydrocarboné divalent ayant 1 à 12 atomes de carbone, linéaire ou ramifié, aliphatique ou aromatique ;
- j est égal à zéro ou 1.

3. Procédé de la revendication 2, dans lequel le fluide (H) est un hydrofluoroéther (fluide (HFE)) comprenant, en plus du carbone, du fluor, et du/des atome(s) d'oxygène d'éther, un ou plusieurs atomes d'hydrogène.

4. Procédé de la revendication 3, dans lequel le fluide (HFE) répond à la formule (II A) ou (II B) ci-dessous :
R^{H*'}O-(R^{H}_{f})ᵣ-R^{H*} (II A)
R^{H*'}O-J-(O)ⱼ-R^{H*} (II B)
dans lesquelles :
- R^{H*'} et R^{H*}, identiques ou différents l'un de l'autre, sont indépendamment choisis parmi les groupes -CₘF₂ₘ₊₁, -CₙF₂ₙ₊₁₋ₕHₕ, -C_{z}F_{2z}OC_{y}F_{2y+1}, -CᵤF_{2u-u'}H_{u'}OC_{w}F_{2w+1-w'}H_{w'}, avec n, m, z, y, u, w étant des entiers de 1 à 8, h, u' et w' étant des entiers ≥ 1, choisis de telle sorte que h ≤ 2n+1, u' ≤ 2u, w' ≤ 2w+1, à condition qu'au moins un de R^{H*'} et R^{H*} dans la formule (II A) soit un groupe -CₙF₂ₙ₊₁₋ₕHₕ ou un groupe -CᵤF_{2u-u'}H_{u'}OC_{w}F_{2w+1-w'}H_{w'}, tels que définis ci-dessus ;
- R^{H}_{f}, J, j et r ont la même signification que celle définie dans la revendication 2.

5. Procédé de la revendication 4, dans lequel le fluide (HFE) répond à la formule (II A) telle que définie dans la revendication 3, dans laquelle r vaut 1.

6. Procédé de la revendication 5, dans lequel R^{H}_{f} est choisi parmi les groupes suivants :
1) -(CF₂O)ₐ-(CF₂CF₂O)_{b}-, avec a et b étant des entiers allant jusqu'à 100, a ≥ 0, b ≥ 0 et a+b > 0 ;
2) -(CF₂-(CF₂)_{z'}-CF₂O)_{b'}-, dans lequel z' est un entier égal à 1 ou 2 ; b' étant un entier allant jusqu'à 100 ;
3) -(C₃F₆O)_{c}-(C₂F₄O)_{b}-(CFL₀O)ₜ-, avec L₀ étant à chaque occurrence indépendamment choisi parmi -F et -CF₃ ; b, t et c étant des entiers allant jusqu'à 100, c > 0, b ≥ 0, t ≥ 0.

7. Procédé selon l'une quelconque des revendications précédentes, dans lequel l'additif (N) est choisi parmi les nanotubes de carbone.

8. Procédé selon l'une quelconque des revendications précédentes, dans lequel le PFPE fonctionnel (F) est un composé répondant à la formule (IV) ci-dessous :
T₁-(CFX)ₚ-O-R_{f}-(CFX)_{p'}-T₂ (IV)
dans laquelle :
chacun des X représente indépendamment F ou CF₃ ;
p et p', identiques ou différents l'un de l'autre, sont des entiers de 0 à 3 ;
R_{f} est une chaîne fluoropolyoxyalcène comprenant des motifs répétitifs R°, lesdits motifs répétitifs étant choisis dans le groupe constitué par :
(i) -CFXO-, dans lequel X représente F ou CF₃,
(ii) -CF₂CFXO-, dans lequel X représente F ou CF₃,
(iii) -CF₂CF₂CF₂O-,
(iv) -CF₂CF₂CF₂CF₂O-,
(v) -(CF₂)ₖ-CFZ-O- dans lequel k est un entier de 0 à 3 et Z est un groupe de formule générale -OR_{f}'T₃, dans laquelle R_{f}' est une chaîne fluoropolyoxyalcène comprenant un nombre de motifs répétitifs de 0 à 10, lesdits motifs récurrents étant choisis parmi les suivants : -CFXO-, -CF₂CFXO-, -CF₂CF₂CF₂O-, -CF₂CF₂CF₂CF₂O-, avec chacun des X représentant indépendamment F ou CF₃ ; et
T₃ est un groupe perfluoroalkyle en C₁-C₃,
et les mélanges de ceux-ci ;
au moins un de T₁ et T₂, qui sont identiques ou différents l'un de l'autre, est un groupe fonctionnel comprenant un hétéroatome choisi parmi O, S, N, P et les mélanges de ceux-ci ; le T₁ ou T₂ restant, le cas échéant, étant choisi parmi H, les atomes d'halogène, un groupe terminal en C₁-C₃₀.

9. Procédé selon la revendication 8, dans lequel le PFPE fonctionnel (F) est choisi dans le groupe constitué par :
1. [X-(CF₂CF(CF₃)O)ₙCF₂COO⁻]M, avec X étant un halogène, M étant un cation monovalent tel que H⁺, Na⁺, K⁺, NH₄⁺ et n étant un entier variant entre 2 et 100 ;
2. [X-(CF₂CF(CF₃)O)ₙCF₂COO⁻]₂M", avec X étant un halogène, M" étant un cation divalent tel que Ca⁺⁺, Mg⁺⁺, Zn⁺⁺, et n étant un entier variant entre 2 et 100 ;
3. (HO)₂OP-O(CH₂CH₂O)_{p*}-CH₂CF₂O-(CF₂CF₂O)_{m'}(CF₂O)_{n'}-CF₂CH₂O(CH₂CH₂O)_{p*}-PO(OH)₂, m' et n' étant des entiers, où le rapport m'/n' varie généralement entre 0,1 et 10 et la somme m'+n' variant entre 2 et 100, et p* varie entre 0 et 3 ;
4. HO-CH₂CF₂O(CF₂O)_{n"}CF₂CF₂O)_{m"}CF₂CH₂-OH, m" et n" étant des entiers, où le rapport m"/n" varie entre 0,1 et 10, et la somme m"+n" variant entre 2 et 100 ;
5. HO(CH₂CH₂O)_{n*}CH₂CF₂O(CF₂O)_{n*'}(CF₂CF₂O)_{m*'}CF₂CH₂(OCH₂CH₂)_{n*}OH, n*, m*' et n*' étant des entiers, où le rapport m*'/n*' varie entre 0,1 et 10, et n* varie entre 1 et 3, et la somme m*'+n*' variant entre 2 et 100 ;
6. M'OOC-CF₂O-(CF₂O)_{n"'}(CF₂CF₂O)_{m"'}CF₂COOM, avec M étant un cation monovalent tel que H⁺, Na⁺, K⁺, NH₄⁺ et m"' et n'" étant des entiers, où le rapport m"'/n"' varie généralement entre 0,1 et 10, et la somme m"'+n"' variant entre 2 et 100.
